# EUROPÄISCHE PATENTSCHRIFT

(11) **EP 1 084 002 B1**
(45) Veröffentlichungstag und Bekanntmachung des Hinweises auf die Patenterteilung: **08.09.2004**
(21) Anmeldenummer: 99927887.2
(22) Anmeldetag: 04.06.1999
(51) Int. Cl.: B08B 3/08, B08B 3/10, H01L 21/00

(54) **VERFAHREN UND ANLAGE ZUM REINIGEN VON HALBLEITERELEMENTEN**
METHOD AND SYSTEM FOR CLEANING SEMICONDUCTOR ELEMENTS
PROCEDE ET INSTALLATION POUR PURIFIER DES ELEMENTS SEMI-CONDUCTEURS PLACES DANS UNE CUVE

(30) Priorität: 04.06.1998 DE 19825063
(43) Veröffentlichungstag der Anmeldung: 21.03.2001
(73) Patentinhaber: Astex GmbH, 13355 Berlin (DE)
(72) Erfinder: GOTTSCHALK, Christiane, D-13353 Berlin (DE); SCHWECKENDIEK, Jürgen, D-10967 Berlin (DE); BRAMMER, Ulrich, D-13347 Berlin (DE)
(74) Vertreter: Pfenning, Meinig & Partner
(86) Internationale Anmeldenummer: PCT/EP1999/003893
(87) Internationale Veröffentlichungsnummer: WO 1999/062649

(56) Entgegenhaltungen:
- EP-A- 0 497 247
- EP-A- 0 567 860
- WO-A-95/02895
- US-A- 5 370 846

## Beschreibung

Die Erfindung betrifft ein Verfahren und eine Anlage zum Reinigen von Halbleiterelementen, wie Wafern oder dergleichen nach dem Oberbegriff des Verfahrensanspruchs 1 bzw. des Vorrichtungsanspruchs 7.

Ein Verfahren und eine Anlage dieser Art ist beispielsweise aus der WO-A-95/02 895 zu entrahmen.

Es ist bekannt, daß Halbleiterscheiben mit flüssigen Chemikalien, insbesondere auch ozonisiertem deionisierten (im Folgenden DI genannt) Wasser behandelt werden. Dazu sind unterschiedlichste Anlagen bekannt, die Rezirkulationssysteme und sogenannte "Single Pass"(Einweg)-Systeme umfassen. Alle Systeme weisen einen Behälter auf, in dem die Halbleiterscheiben aufgenommen sind und durch den die Reinigungsflüssigkeit, bestehend aus ozonisiertem DI-Wasser und gegebenenfalls anderen Chemikalien hindurchströmt. Dabei kann der Behälter als Überlaufbehälter, als Durchstrombehälter, als Drehbehälter oder dergleichen ausgebildet sein und auch die Zuführung der Flüssigkeit kann auf die unterschiedlichste Art geschehen, beispielsweise über Düsen in den Behälter eingesprüht oder als Flüssigkeitsstrom über Rohrleitungen eingeleitet werden. Bei den Rezirkulationsverfahren wird zumindest ein Teil der verbrauchten Reinigungsflüssigkeit über Filter- und Reinigungseinheiten in den Kreislauf zurückgeführt, d.h. mit frischem ozonisierten DI-Wasser gemischt. Der Behälter ist über Rohrleitungen mit einer Vorrichtung zur Erzeugung von ozonisiertem DI-Wasser verbunden, in der von einem Ozongenerator geliefertes Ozon in hochreinem DI-Wasser gelöst wird.

Die WO 95/02895 betrifft beispielsweise ein Verfahren und eine Vorrichtung zur Behandlung von Halbleiterwafer in deionisiertem Wasser dem Ozon zugesetzt wurde. Dabei weist das deionisierte Wasser einen im Wesentlichen konstanten pH-Wert um z herum und nur einen geringen Anteil von Organik, Metallionen und verunreinigenden chemischen Substanzen auf.

Bei derartigen Anlagen nach dem Stand der Technik schwankte die Ozonkonzentration in den ozonisierten DI-Wässern bei unterschiedlichen DI-Wässern.

Aus der EP 0 567 860 A ist ein Verfahren zum Entfernen von Mikroorganismen, die sich in Wärmetauscherrohranordnungen absetzen und die Rohre verstopfen, bekannt. Das verwendete Wasser, z.B. Kühlwasser, ist mit organischen Verunreinigungen und Metallionen versehen, die stark reaktiv mit Ozon sind, wodurch letzteres einer starken Selbstzersetzung unterzogen wird. Diese Selbstzersetzung wird durch Absenken des pH-Wertes aufgrund des Zusatzes von Kohlenstoffdioxid verringert, so daß die Ablagerung von Organismen verzögert wird.

Die Erfinder haben sich die Aufgabe gestellt, ein Verfahren und eine Anlage zum Reinigen von Halbleiterelementen zu schaffen mit denen eine gleichbleibend hohe Ozonkonzentration für das zur Reinigung herangezogene ozonisierte deionisierte Wasser erzielt wird.

Diese Aufgabe wird erfindungsgemäß durch die kennzeichnenden Merkmale des Patent anspruchs 1 und des Patentanspruchs 7 gelöst.

Vorteilhafte weiterbildungen der Erfindung sind Gegenstand der betreffenden abhängigen Ansprüche.

Typisch für die DI-Wasserversorgung für die Halbleiterindustrie (es wird auch von UPW = Ultra Pure Water gesprochen) sind extrem geringe Leitfähigkeit (18 Mohm/cm), ein geringer Metallionengehalt (< 1 pp/Metall) und ein geringer Anteil von Organik (TOC (Total Organic Carbon) :<1ppb), wobei das DI-Wasser neutral ist, d.h. der pH-Wert liegt normalerweise um 7 herum.

Es hat sich gezeigt, daß nicht für alle verwendeten hochreinen DI-Wässer die gewünschten hohen Ozonkonzentrationen erzeugt werden konnten, beispielsweise wurden einerseits Ozonkonzentrationen nun 20 ppm erzielt, während andererseits 50 bis 120 ppm erreicht wurden. Bei den geringen Ozonkonkonzentrationen wurde außerdem festgestellt, daß sie nur noch wenig vom Flüssigkeitsvolumenstrom abhängen, während üblicherweise die Ozonkonzentration mit geringer werdendem Volumenstrom steigt. Beispielsweise wurde in einem Fall bei Volumenströmen von 2 l/min eine Ozonkonzentration bis 150 ppm, bei einem Volumenstrom von 10 l/min bis 70 ppm und bei 20 l/min bis 40 ppm erzeugt, während im dem anderen Fall bei gleichen Volumen jeweils Ozonkonzentrationen von 15 ppm, 10,5 ppm und unter 20 ppm (nicht abgebildet) erzielt wurden.

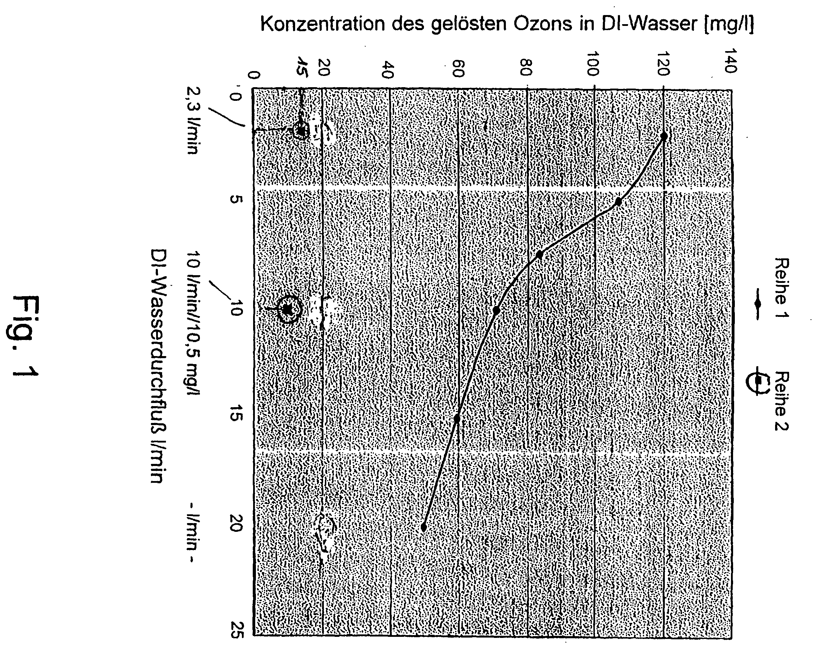

In Fig. 1 ist ein solches Phänomen dargestellt, die Kennlinien zeigen die Ozonkonzentration in Abhängigkeit vom Durchfluß des DI-Wassers, wobei die "Reihe 1" Meßwerte bei der erwarteten Ozonkonzentration und die "Reihe 2" Meßwerte bei einer unerwarteten niedrigen Ozonkonzentration zeigen.

Es zeigte sich somit, daß ein erheblicher Ozonzerfall auftrat, obwohl aufgrund der der Verwendung von DI-Wasser hoher Reinheit, nicht mit Metallionen oder Metalloxiden zu rechnen ist, die den Ozonzerfall katalysieren. Auch ist der TOC-Wert, der als Maß für solche Stoffe herangezogen werden kann, die Ozon durch Reaktion mit Ozon zehren bzw. verbrauchen können gering, so daß nicht mit einer nennenswerten Zehrung zu rechnen war.

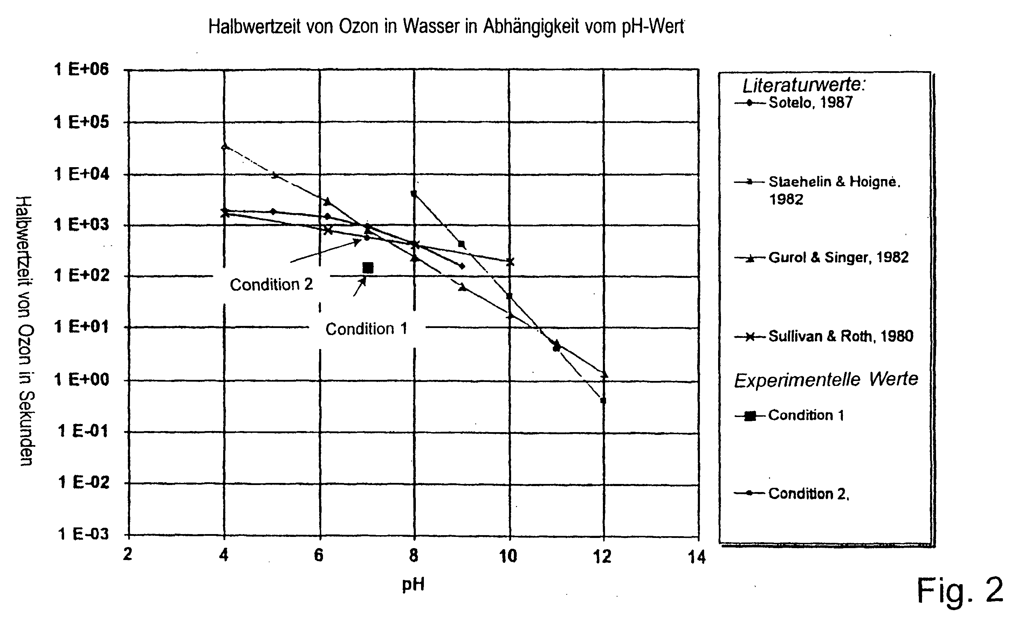

Die Erfindung beruht daher auf der überraschenden Erkenntnis, daß, obwohl aufgrund des Fachwissens nicht damit zu rechnen ist, die Zerfallsgeschwindigkeiten des Ozons sich in verschiedenen DI-Wassern erhöht. In der Fig. 2 sind Kennlinien für Halbwertszeiten von ozonisierten Flüssigkeiten aus der Literatur in Abhängigkeit vom pH-Wert angegeben. Nach diesen Literaturdaten ist die berechnete Halbwertszeit des Ozonzerfalls der Größenordnung nach etwa 1000 Sekunden bei einer Wassertemperatur von 200C und einem pH-Wert von 7.

Bei einem anderen DI-Wasser, das die gleichen Kriterien wie das DI-Wasser entsprechend der Literaturdaten erfüllte, nämlich es enthielt geringe Metallionen und einen geringen Druck sowie einen pH-Wert zwischen 6,8 und 5, war die Zerfallsgeschwindigkeit hoch, die Halbwertszeit wurde zu etwa 150 Sekunden bestimmt, wie in Fig. 2 unter dem Meßwert "Condition l" dargestellt ist.

Erfindungsgemäß wurde dem von dem Ozongenerator erzeugten Ozon/Sauerstoffgemisch CO₂ zugefügt. Durch den Zusatz von CO₂ zu dem DI-Wasser konnte ohne wesentliche pH-Wertbeeinflussung die Zerfallsgeschwindigkeit vermindert werden und zwar auf eine Halbwertszeit von ca. 750 Sekunden und eine Ozonkonzentration wie sonst üblich erzielt werden. Dies zeigt Fig. 2 mit dem Meßwert "Condition 2" DI-Wasser mit CO₂-Zusatz, wobei zu erkennen ist, daß die Zerfallsgeschwindigkeit zu dem Meßwert "Condition 1" nahezu verdreifacht werden konnte.

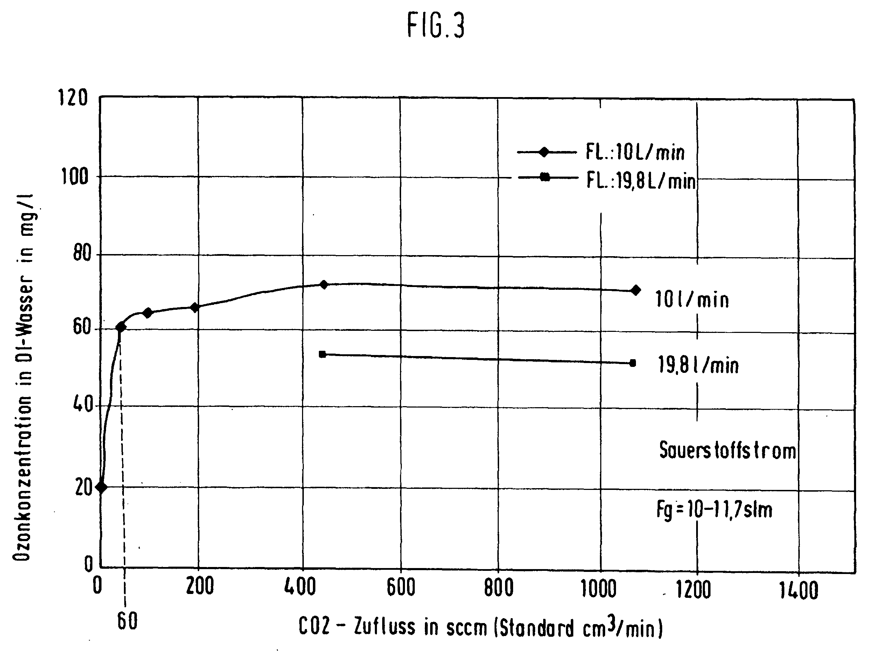

Fig. 3 zeigt die Ozonkonzentration am Ausgang der Anlage für einen Durchfluß von 10,75 l/min in Abhängigkeit von der Dosierung des DI-Wassers mit CO₂, wobei das DI-Wasser ohne Dosierung die Zerfallsgeschwindigkeit entsprechend "Condition 2" nach Fig. 2 zeigte.

Aus Fig. 3 ist zu erkennen, daß mit einer Dosierung von weniger als 1% CO₂ die erfindungsgemäße Anlage bereits die dreifache Ozonkonzentration im Vergleich zu dem nicht mit CO₂ versetzten DI-Wasser liefern konnte. Es wird angenommen, daß dieses Verhalten möglicherweise mit der Unterdrückung der radikalischen Zerfallskette von Ozon zu erklären ist, wobei CO₂ als "Scavenger" den radikalischen Zerfall von Ozon verlangsamt. Es wird angenommen, daß Spuren von Peroxiden in dem DI-Wasser vorhanden sind, die möglicherweise bei der UV-Behandlung von DI-Wasser zur Desinfektion dann auftreten können, wenn Sauerstoff bei der Aufbereitung des DI-Wassers nicht vollständig entfernt wurde. Zugleich kann mit einer Absenkung des pH-Wertes gerechnet werden.

Insgesamt kann mit dem erfindungsgemäßen Verfahren und der erfindungsgemäßen Anlage die Reinigungswirkung von Halbleiterelementen mittels ozonisiertem deionisierten Reinstwasser stabilisiert werden, da aufgrund der Zuführung von CO₂ die Ozonkonzentration der erfindungsgemäßen Anlage auch bei unterschiedlichen DI-Wassern gleichmäßig hoch gehalten werden kann.

Ein Ausführungsbeispiel der erfindungsgemäßen Anlage ist in der Zeichnung dargestellt und das erfindungsgemäße Verfahren und die erfindungsgemäße Vorrichtung wird unter Heranziehung der Zeichnung in der nachfolgenden Beschreibung näher erläutert. Es zeigen
- Fig. 1: ein Diagramm der gelösten Ozonkonzentration in Abhängigkeit vom Durchfluß des DI-Wassers bei zwei unterschiedlichen Arten von DI-Wassern,
- Fig. 2: ein Diagramm von Halbwertszeiten von Ozon in entsprechenden Flüssigkeiten in Abhängigkeit vom pH-Wert aus der Literatur sowie für die zwei unterschiedlichen DI-Wässer entsprechend Fig. 1,
- Fig. 3: ein Diagramm die Ozonkonzentration in Abhängigkeit von der Dosierung von CO₂ für einen bestimmten Durchfluß des DI-Wassers, und
- Fig. 4: eine schematische Darstellung eines Ausführungsbeispiels der erfindungsgemäßen Anlage.

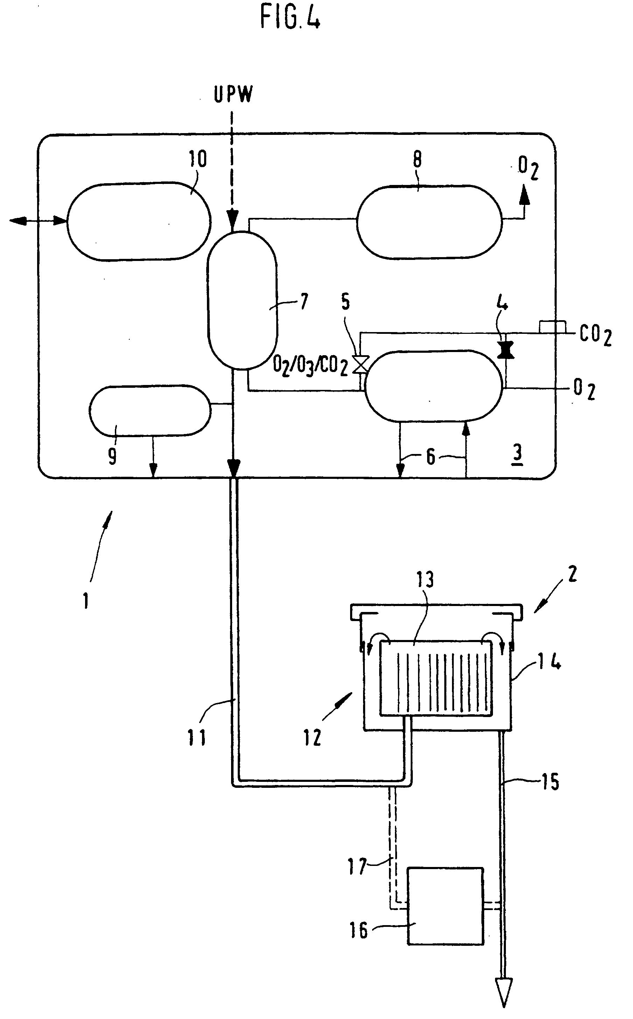

Die in Fig. 4 dargestellte Anlage weist eine Vorrichtung 1 zur Erzeugung von hochreinem ozonisierten DI-Wasser und eine Einrichtung 2 zum Reinigen von Wafern oder Halbleiterelementen, wie sie im Stand der Technik bekannt ist. Die Vorrichtung zum Erzeugen von ozonisiertem DI-Wasser weist einen Ozongenerator 3 auf, der nach dem Prinzip der stillen elektrischen Entladung arbeitet. Dem Ozongenerator 3 ist mit einer nicht dargestellten Quelle für hochreinen Sauerstoff und mit einer nicht dargestellten Quelle für hochreines CO₂ verbunden, wobei dem Eingang des Ozongenerators 3 über eine Drossel 4 und dem Ausgang des Ozongenerators über ein Ventil 5 das CO₂ zugeführt wird. Der Ozongenerator 3 wird von Kühlwasser durchflossen, was durch die Pfeile 6 dargestellt ist. Mit der Ausgangsleitung des Ozongenerators 3 ist ein Kontaktor 7 verbunden, dem DI-Wasser für die Halbleiterindustrie (UPW) zugeführt wird. Der Kontaktor weist in seinem Behälter Wasserfilm-bildende Teilchen auf, die große Austauschflächen zwischen Wasser und zugeführtem Ozon bieten. Der Kontaktor 7 steht unter Überdruck.

Mit dem Kontaktor 7 ist ein Ozonvernichter 8 verbunden. Weiterhin ist ein Ozonsensor 9 vorgesehen, der die Ozonkonzentration mißt. Eine Steuereinheit 10 steuert die Verfahrensparameter der Vorrichtung 1.

Die Vorrichtung 1 ist über Rohrleitungen 11 mit der Reinigungseinrichtung 2 für Halbleiterelemente verbunden. Diese weist einen Überlaufbehälter 12 mit einem Innentank 13 und einem Auffangbehälter 14 auf. In dem Innentank 13 sind die Halbleiterscheiben gestapelt und die Rohrleitung 11 ist mit dem Innentank 13 verbunden. Der Überlaufbehälter 14, der im Ausführungsbeispiel gegen die Umgebungsluft abgeschlossen ist, weist eine Ablaufleitung 15 für verbrauchtes DI-Wasser auf. Gegebenenfalls kann ein Teil des verbrauchten Wassers über die gestrichelt gezeichnete Rezirkulationsleitung 17 zurückgeführt werden in der Filter- und Reinigungseinheiten 16 vorgesehen sind.

Die Reinigungseinrichtung 2 ist hier nur schematisch dargestellt, selbstverständlich können zusätzliche Einrichtungen wie Tanks für unterschiedliche Chemikalien vorgesehen sein, die dem ozonisierten DI-Wasser zugefügt werden können.

In der in Fig. 4 dargestellten Anlage wird das DI-Wasser (UPW), das einen geringen Metallionengehalt, einen geringen TOC-Anteil, eine geringe Leitfähigkeit und einen pH-Wert um 7 herum aufweist in den Kontaktor 7 geleitet, der vorzugsweise unter erhöhtem Druck betrieben wird, um die Löslichkeit von Ozon in DI-Wasser, daß z.B. bei Raumtemperatur angewendet wird, zu erhöhen. In der dargestellten Anlage wird Ozon im Gegenstrom zugeführt. In einem anderen Ausführungsbeispiel kann das Ozon auch im Gleichstrom zugeführt werden, diese Anordnungen haben allerdings den Nachteil, daß die Ozonkonzentration, die beim Verlassen der Kontaktvorrichtung mit der Flüssigkeit im Gleichgewicht steht, um die Menge des gelösten Ozons vermindert ist und dadurch eine geringere Konzentration in der Flüssigkeit erzielt wird.

Das Ozon wird mit dem Ozongenerator 3 erzeugt, der nach dem Prinzip der stillen elektrischen Entladung arbeitet. In der schematischen Darstellung ist auf die Darstellung von Vorrichtungen verzichtet worden, die zur Druck- und Volumenstromregelung verwendet werden. Ebenso sind Sicherheits- und Steuerventile und -filter, die erforderlich sind, nicht angegeben, da sie nicht Gegenstand der Erfindung sind.

Über das Ventil 5 wird dem vom Ozongenerator 3 erzeugten Ozon/Sauerstoffgemisch hochreines CO₂ zugefügt und zwar in Konzentrationen von größer als 99,95%. Durch die Zudosierung von CO₂ wird der radikalische Zerfall von Ozon verlangsamt und der pH-Wert des DI-Wassers abgesenkt.

Das 02/03/CO₂-Gemisch wird im Kontaktor 7 in dem DI-Wasser gelöst und überschüssiges Ozon in der Gasphase wird nach Verlassen des Kontaktors 7 mit dem Ozonvernichter 8 in Sauerstoff zurückgewandelt.

Der Ozonsensor 9 mißt die Ozonkonzentration in der aus dem Kontaktor 7 austretenden Flüssigkeit. Das zur Messung herangezogene ozonhaltige DI-Wasser wird entweder in den Hauptvolumenstrom zurückgeleitet oder mittels einer Abwasserleitung verworfen. Die Vorrichtung 1 zur Erzeugung von ozonisiertem DI-Wasser liefert je nach gewähltem Volumenstrom des DI-Wassers und den Betriebsbedingungen der Anlage eine Ozonkonzentration zwischen 50 ppm und 150 ppm.

Dem Ozongenerator 3 wird hochreiner Sauerstoff zugeführt, was bei den meisten Ozongeneratoren, die nach dem Prinzip der stillen elektrischen Entladung arbeiten, zu einem Abfall der Ozonkonzentration über die Lebensdauer führt. Um diesen Abfall zu vermeiden wird über die Drossel 4 CO₂ in solchen Mengen eingeleitet, daß im 02/CO₂-Gemisch Konzentrationen von unter 5000 ppm vorzugsweise 300 bis 1000 ppm erreicht werden. Durch diesen Zusatz zeigt der Ozongenerator 3 über seine Lebensdauer ein stabiles Konzentrationsverhalten. Es kann auch eine größere Menge CO₂ zugesetzt werden, ist aber nicht notwendig. Es konnte auch gezeigt werden, daß sogar mit einem Zusatz von 50.000 PPM CO₂ keine nachteiligen metallischen Verunreinigungen mit dem Ozongenerator erzeugt werden.

Das ozonisierte DI-Wasser wird aus der Vorrichtung 1 über die Rohrleitung 11 gegebenenfalls unter Zusatz von weiteren Chemikalien in den Tank 13 geleitet und strömt mit reinigender Wirkung durch die Halbleiterscheiben. Das überströmende Wasser wird von dem Auffangbehälter 14 aufgefangen und über die Abflußleitung 15 abgeführt. Ein solcher Strömungsverlauf wird als "Single Pass" bezeichnet, bei dem das verbrauchte Wasser mit den Chemikalien verworfen wird. Ein solcher Verströmungsverlauf hat den Nachteil, daß der Chemikalienverbrauch hoch ist. Daher kann ein Teil des verbrauchten Wassers über die Filter und Reinigungseinheit 16 im Kreislauf 17 rezirkuliert werden. Eine solche Lösung hat den Nachteil, daß wegen möglicher Verunreinigungen die Flüssigkeit oft gefiltert werden muß. Je nach Anwendungsfall wird die bessere Lösung gewählt.

Die Einrichtung 2 zur Reinigung der Halbleiterelemente nach Fig. 4 ist nur ein Ausführungsbeispiel.

Selbstverständlich können die im Stand der Technik bekannten und teilweise in der Beschreibungseinleitung beschriebenen Reinigungseinrichtungen verwendet werden.

## Patentansprüche

1. Verfahren zum Reinigen von Halbleiterelementen, die in einem Tank (2) aufgenommen sind, mit ozonisiertem deionisierten (DI) Reinstwasser, bei dem in einem Ozongenerator (3) nach dem Prinzip der stillen elektrischen Entladung unter Zuführung von hochreinem Sauerstoff Ozon erzeugt wird, das einem von DI-Wasser durchströmten Kontaktor (7) zugeführt wird, wobei das Ozon in dem DI-Wasser gelöst wird, und bei dem das ozonisierte DI-Wasser gegebenenfalls unter Zuführung von weiteren Chemikalien durch den Tank (2) mit den Halbleiterelementen zu deren Reinigung geleitet wird und das verbrauchte DI-Wasser abgeführt wird,
**dadurch gekennzeichnet,**
**daß** dem vom Ozongenerator (3) erzeugten Ozon/Sauerstoffgemisch CO₂ zugegeben wird und daß in den hochreinen Sauerstoffstrom, der dem Ozongenerator (3) zugeführt wird, zur Erzielung eines stabilen Konzentrationsverhaltens des Ozongenerators CO₂ geleitet wird.

2. Verfahren nach Anspruch 1, **dadurch gekennzeichnet, daß** das verbrauchte DI-Wasser zumindest teilweise gefiltert und rezirkuliert und mit frischen ozonisiertem DI-Wasser gemischt wird.

3. Verfahren nach Anspruch 1 oder 2, **dadurch gekennzeichnet, daß** die Reinigung im Tank (2) weitgehend oder völlig unter Luftabschluß durchgeführt wird.

4. Verfahren nach einem der Ansprüche 1 bis 3, **dadurch gekennzeichnet, daß** das Ozon dem Kontaktor (7) im Gegenstrom zu dem DI-Wasser zugeführt wird.

5. Verfahren nach einem der Ansprüche 1 bis 4, **dadurch gekennzeichnet, daß** CO₂ dem Ozon/Sauerstoffgemisch in einer Konzentration bis zu 10% zugegeben wird.

6. Verfahren nach einem der Ansprüche 1 bis 5, **dadurch gekennzeichnet, daß** dem hochreinen Sauerstoff das CO₂ in einer Konzentration von 300 bis 5000 ppm zugeführt wird.

7. Anlage zum Reinigen von Halbleiterelementen mit einem die Halbleiterelemente aufnehmenden Behälter (2), der mit einer Vorrichtung zur Erzeugung von ozonisiertem deionisierten (DI) Reinstwasser über Rohrleitungen verbunden ist und der eine Ablaufleitung für verbrauchtes DI-Wasser aufweist, wobei die Vorrichtung zur Erzeugung des ozonisierten DI-Wassers einen Ozongenerator (3) und einen Kontaktor (7) aufweist, dem DI-Wasser zugeführt wird und der mit dem Ozongenerator (3) verbunden ist, **dadurch gekennzeichnet, daß** eine CO₂-Quelle vorgesehen ist, die zum Einleiten von CO₂ über ein Ventil (5) mit einer das Ozon/Sauerstoffgemisch führenden Verbindungsleitung zwischen Ozongenerator (3) und Kontaktor (7) verbunden ist, wobei der Ozongenerator (3) eine Zuführleitung für hochreinen Sauerstoff aufweist, dem CO₂ aus der CO₂-Quelle zuführbar ist.

8. Vorrichtung nach Anspruch 7, **dadurch gekennzeichnet, daß** die Zuführleitung für hochreinen Sauerstoff über ein Steuerelement (4), wie eine Drossel mit der CO₂-Quelle verbunden ist.

9. Vorrichtung nach Anspruch 7 oder 8, **dadurch gekennzeichnet, daß** der Behälter als Überlaufbehälter (12) mit Auffangvorrichtung für das verbrauchte DI-Wasser ausgebildet ist.

10. Vorrichtung nach einem der Ansprüche 7 bis 9, **dadurch gekennzeichnet, daß** ein Teil des verbrauchten DI-Wassers über eine Filter- und Reinigungsvorrichtung (16) im Kreislauf geführt ist.

11. Vorrichtung nach einem der Ansprüche 7 bis 10, **dadurch gekennzeichnet, daß** der Behälter (2) gegen die Umgebung abgeschlossen ist.

## Claims

1. Method for cleaning semi-conductor elements accommodated in a tank (2) with ozonised deionised (DI) purest water, with ozone being generated in an ozone generator (3) by the principle of quiet electrical discharge with highly pure oxygen being delivered, which is fed to a contactor which is flowed through by DI-water, and the ozone is dissolved in the DI-water, and the ozonised DI-water is, if appropriate with delivery of additional chemicals through the tank (2) with semi-conductor elements passed through for cleaning the latter, and the used DI-water is discharged, **characterised in that** CO₂ is added to the ozone/oxygen mixture generated by the ozone generator (3), and CO₂ is fed into the highly pure flow of oxygen which is fed to the oxygen generator (3) so as to achieve a stable concentration behaviour of the ozone generator CO₂.

2. Method according to Claim 1, **characterised in that** the used DI-water is at least partially filtered and recirculated and mixed with fresh ozonised DI-water.

3. Method according to Claim 1 or 2, **characterised in that** cleaning in the tank (2) is carried out extensively or entirely under exclusion of air.

4. Method according to one of Claims 1 to 3, **characterised in that** the ozone is fed to the contactor (7) in counter-flow to the DI-water.

5. Method according to one of Claims 1 to 4, **characterised in that** CO₂ is added to the ozone/oxygen mixture at a concentration of up to 10%.

6. Method according to one of Claims 1 to 5, **characterised in that** to the highly pure oxygen is fed CO₂ at a concentration of between 300 and 5,000 ppm.

7. System for cleaning semi-conductor elements comprising a vessel (2) for accommodating the semi-conductor elements which is linked to a device for generating ozonised deionised (DI) purest water via pipelines and which comprises a discharge pipe for used DI-water, and for the purpose of generating the ozonised DI-water the device comprises an ozone generator (3) and a contactor (7) to which is fed DI-water and which is linked to the ozone generator (3), **characterised in that** a CO₂ source is provided which is for introduction of CO₂ via a valve (5) connected to an ozone/oxygen mixture ducting connecting pipe between ozone generator (3) and contactor (7), and the ozone generator (3) comprises a delivery pipe for highly pure oxygen to which CO₂ is delivered from the CO₂ source.

8. Device according to Claim 7, **characterised in that** the delivery pipe for highly pure oxygen is connected via a control element (4), such as a throttle, to the CO₂ source.

9. Device according to Claim 7 or 8, **characterised in that** the vessel is designed as an overflow vessel (12) with collecting device for used DI-water.

10. Device according to one of Claims 7 to 9, **characterised in that** a portion of used DI-water is circulated via a filtering and cleansing device (16).

11. Device according to one of Claims 7 to 10, **characterised in that** the vessel (2) is sealed from the environment.

## Revendications

1. Procédé pour purifier des éléments semi-conducteurs, qui sont contenus dans une cuve (2), avec de l'eau extrêmement pure désionisée (DI) et ozonisée, dans lequel on génère de l'ozone dans un générateur d'ozone (3), selon le principe de la décharge électrique silencieuse et par apport d'oxygène très pur, lequel ozone est amené vers un contacteur (7) traversé par de l'eau désionisée DI, suite à quoi l'ozone est dissous dans l'eau DI, et dans lequel l'eau DI ozonisée, éventuellement avec apport d'autres produits chimiques, est dirigée à travers la cuve (2) avec les éléments semi-conducteurs afin de les purifier, et l'eau DI utilisée est évacuée,
**caractérisé en ce que** l'on ajoute au mélange ozone/oxygène généré par le générateur d'ozone (3) CO₂ et **en ce que** l'on dirige CO₂ dans le courant d'oxygène très pur qui est amené vers le générateur d'ozone (3), pour obtenir un comportement en concentration stable du générateur d'ozone.

2. Procédé selon la revendication 1, **caractérisé en ce que** l'eau DI consommée est au moins partiellement filtrée et recyclée, et mélangée avec de l'eau DI fraîchement ozonisée.

3. Procédé selon la revendication 1 ou 2, **caractérisé en ce que** la purification est réalisée dans la cuve (2) largement ou entièrement sous exclusion d'air.

4. Procédé selon l'une des revendications 1 à 3, **caractérisé en ce que** l'ozone est amené vers le contacteur (7) à contre-courant par rapport à l'eau DI.

5. Procédé selon l'une des revendications 1 à 4, **caractérisé en ce que** l'on ajoute CO₂ au mélange ozone/oxygène selon une concentration allant jusqu'à 10%.

6. Procédé selon l'une des revendications 1 à 5, **caractérisé en ce que** l'on amène le CO₂ vers l'oxygène très pur selon une concentration allant de 300 à 5 000 ppm.

7. Installation de purification d'éléments semi-conducteurs comportant un réservoir (2) contenant les éléments semi-conducteurs, qui est relié par des conduites à un dispositif de génération d'eau extrêmement pure désionisée (DI) et ozonisée et qui présente une conduite d'évacuation de l'eau DI consommée, dans laquelle le dispositif de génération de l'eau DI ozonisée comporte un générateur d'ozone (3) et un contacteur (7) vers lequel l'eau DI est amenée et qui est relié au générateur d'ozone (3), **caractérisée en ce que** l'on prévoit une source de CO₂ qui est reliée, pour introduire DU CO₂ par une soupape (5), à une conduite de liaison transportant le mélange ozone/oxygène entre le générateur d'ozone (3) et le contacteur (7), le générateur d'ozone (3) présentant une conduite d'amenée d'oxygène très pur vers laquelle on peut amener CO₂ depuis la source de CO₂.

8. Installation selon la revendication 7, **caractérisée en ce que** la conduite d'amenée d'oxygène très pur est reliée à la source de CO₂ par un élément de commande (4) tel qu'un organe d'étranglement.

9. Installation selon la revendication 7 ou 8, **caractérisée en ce que** le réservoir est conçu comme un réservoir de trop-plein (12) comportant un dispositif collecteur pour l'eau DI consommée.

10. Installation selon l'une des revendications 7 à 9, **caractérisée en ce qu'**une partie de l'eau DI consommée est amenée dans le circuit par un dispositif de filtration et de purification (16).

11. Installation selon l'une des revendications 7 à 10, **caractérisée en ce que** le réservoir (2) est fermé à l'environnement.
